# EUROPEAN PATENT APPLICATION

(11) **EP 1 780 933 A1**
(43) Date of publication of application: **02.05.2007**
(21) Application number: 06255499.3
(22) Date of filing: 25.10.2006
(51) Int. Cl.: H04L 9/06, H04L 9/22, G07C 15/00, G06F 7/58

(54) **A method of generating a random key**

(30) Priority: 25.10.2005 GB 0521664
(71) Applicant: Cryptara Limited, Salisbury, Wiltshire SP5 3PL (GB)
(72) Inventor: McMullan Hawthorne, William, Brixham Road, Kingswear TQ6 0BB (GB)
(74) Representative: Brown, Michael Stanley

(57) **Abstract**

A method of generating a random key includes the use of an algorithm designed to imitate a spinning "wheel of fortune".

## Description

### Field of the Invention

This invention relates to a method of generating a random key for an encryption system.

Many encryption systems require the generation of a key. The key may be a session key, used for one message only, or it may be a master key of much greater complexity used for encrypting session keys. In either case, the randomising function of a PC or any other form of computer is unsafe. This function only generates pseudo-randomness, not pure randomness, using a number of starter numbers, called seeds, combined with a recursive mathematical function which develops the next term in the series from previous terms. By way of example only, we consider the 12-figure session key 147903454778. It would appear that such a key has a strength of one million, million, that is to say, it would require one million, million trials to exhaust all possible variants. But if, as is common, the pseudo-random function uses, as its seed, the time clock of the computer to the nearest second, then the complexity of the key merely corresponds to the number of seconds in a day, namely, 86400.

It is an object of the present invention to provide an improved method of generating a random key.

A more specific object of the present invention is to provide means whereby an ordinary computer can be used to generate a truly random key to any required complexity.

### Summary of the Invention

According to a first aspect of the present invention there is provided a method of generating a random key that includes the use of an algorithm designed to imitate a spinning "wheel of fortune".

According to a second aspect of the present invention there is provided means for generating a random key that includes a data storage means on which there is an algorithm designed to imitate a spinning "wheel of fortune".

Such a key can be expressed in decimals or hex numbers.

The present invention provides means for using an ordinary computer to generate a purely random key to any required complexity. Such a key can be expressed in decimals or hex numbers.

Decimal numbers are numbers using the symbols 0123456789. The decimal system is a place-value system. For example, the figure 9 in the number 379 has a value of 9 units, whereas the figure 9 in the number 1983 has a value of 9 hundreds.

Hex numbers use the symbols 0123456789ABCDEF. It is also a place value system. As we move from right to left the numbers grow in value by a factor of sixteen.

### Decimal numbers and their Hex equivalents:

| | | | | | | | |
|---|---|---|---|---|---|---|---|
| Decimal | 5 | 16 | 15 | 17 | 256 | 257 | 4095 |
| Hex | 005 | 010 | 00F | 011 | 100 | 101 | FFF |

Note that any decimal number in the range 0 - 4095 can be written as a 3-figure hex number.

In a specific embodiment of the present invention, an algorithm is designed to imitate a spinning "wheel of fortune" with 4096 numbers on it ranging from 0 to 4095 and arranged in any pseudo-random order. The algorithm is designed so that the wheel spins at high speed - around 10,000 revolutions per second is easily achievable. The wheel of fortune is interrupted by striking any key on the keyboard and, at that point, a number in the range 0- 4095 is selected. Such a number adds three hex numbers to the master key. Zero adds 000, 4095 adds FFF, 2015 ads 7DF. Every time any key is struck, three hex numbers are added. Each addition increases the strength of the master key by 12 bits. A single HEX value in the decimal range 0-15 is equivalent to a binary number in the range 0000 to 1111. Hence three hex values are equivalent to 12 binary values (12 bits).

A suitable algorithm, written in QUASI-BASIC, is as follows:
DIM R%(4096)
MASTERKEY$=""
KEYSTRENGTH%=0
NUMBERIN:
S$=INKEY$
N%=N%+1
IF N%=4096 THEN N%=0
S$=INKEY$
IF S$= "" THEN GOTO NUMBERIN
MASTERKEY$ = MASTERKEY$+HEX$(R%(N%))
KEYSTRENGTH% = KEYSTRENGTH%+12
IFKEYSTRENGTH% = REQUIREDKEYSTRENGTH% THEN END
GO TO NUMBERIN

A rotation speed of around 10,000 per second ensures randomness and the resulting master key is totally free from any recursive structure. There is no upward limit on key strength.

The following 3072-bit Master Key was generated by 256 key strokes using all fingers in a piano-like manner. The generation time was under one-minute. The rotational speed of the algorithm, written in C++, was in excess of 57,000 revolutions per minute:
D7D8AA377A35251C5E4279D92B6CA4524BCBE28382EE869 06FC0F4186025B1C66C824EAE45B3B580B5AC444094365AB F9E4A81 E271 EF9DF3D8705603B18CCD3FE4C930D261 F854 40589DBA07CD29D4634865C02DED509977E6FB1AF418D44 CF0F1483AF2270B0E5A0C2B56EFC4E0414AC98ADED9D82 B5B988CC45C19091148F6880FC3AD9B3FBC67281290819C3 C889FD395C680AC372C646E43166AFEB3D3F4A7639E1B98 5A1320749AF1525C7F1 EB4DEEAE58D9650815FA1A5111956 18A39F30CFFOED2B13105AFF47E4DF7CEEB63CE6AC3A1C ADD9AAA5681 B67F5B3D2EAB2DB18B59ACA75027B85064F B3FED72FCD6B87BA57747757E2E9CEEDCB5AB7E110F5EF 7CF1455C26FAA157FE642BC49386809BD39F40F4B36EAAE FACF981 B71 CFCFCD77824A0BF42AA01 DC6C47DBOEF050E 51 A49249C0FCA26EC7154C51 E18252A62DE1595FD3427144 2A32F2B85A15053254E4E05E070B4ED8C804AD2CA6E4451 39D4018961364F329AAC792F0CF40CD33BC09CB24CFBB7A 242FCFE039C2B074C

There are cases of commercial value where very large streams are required which, though not purely random, are non-recursive to such a degree as to make it mathematically infeasible to recreate the whole stream from a partial sample. In this situation the method for augmenting the key stream, 12 bits at a time, described above, becomes impractical. For example, a 49,152 bit stream would require 4096 key-strokes. To produce a higher output of non-recursive randomness per key stroke the "wheel of fortune" is modified as follows:

The wheel of fortune now consists of an array of pseudo-random numbers generated by the PC. The array is maintained in a continuous state of alteration by the continuous pseudo-random selection of a position on the array and the addition mod 16 of a pseudo-random hex number to the existing number at that position. Thus, for example, the addition of "A" to the existing value "9" changes the number at that position to "3". When a key is depressed, the entire array is added to the key stream. Since the composition of the array is unknown at the point of transfer, and since the order of the elements themselves is scrambled, any recursive elements in its composition cannot be traced.

A suitable algorithm, written in QUASI-BASIC is as follows:
NEWCYCLE:
FOR M% = 0 TO 511
Q% = RANDOMLY SELECTED NUMBER IN RANGE 0-511
R%(Q%) = R%(Q%) + RANDOMLY SELECTED NUMBER IN RANGE 0-15
R%(Q%)=R%(Q%) MOD 16
K$ = INKEY$
IF K$ =""THEN
ACCUMULATEDARRAY = ""
FOR P% = 0 TO 511
ACCUMULATEDARRAY$ = ACCUMULATEDARRAY$ + HEX$(R%(P%))
NEXT P%
END IF
NEXT M%
GOTO NEWCYCLE

The above algorithm adds 512 hex numbers, equivalent to 2048-bits, of non-recursive random stream per key stroke. Thus a 49,152-bit non-recursive random stream can be created with 24 key strokes. In general, the amount added per key stroke is decided by the speed of operation of the algorithm. In the above example, the algorithm can be made to run at 1000 complete cycles per second, where a cycle is defined as a set of 512 alterations. If key strikes are randomly spaced between one and five seconds all traces of recursion are eliminated. A proposed commercial application of this invention produces a 12,582,912-bit stream with 1536 key strokes over a period of two hours at a transfer rate of 8192 bits per key stroke.

## Claims

1. A method of generating a random key that includes the use of an algorithm designed to imitate a spinning "wheel of fortune".

2. A method as claimed in Claim 1, in which the random key is expressed in decimals.

3. A method as claimed in Claim 1, in which the random key is expressed in hex numbers.

4. A method as claimed in Claim 3, in which the "spinning wheel of fortune" has 4096 numbers on it.

5. Means for generating a random key that includes a data storage means on which there is an algorithm designed to imitate a spinning "wheel of fortune".

6. Generating means as claimed in Claim 4, in which the random key is expressed in decimals.

7. Generating means as claimed in Claim 4, in which the random key is expressed in hex numbers.

8. Generating means as claimed in Claim 7, in which the "spinning wheel of fortune" has 4096 numbers on it.

9. Generating means as claimed in Claim 4, in which the "spinning wheel of fortune" comprises an array of pseudo-random numbers generated by a computer.

10. Generating means as claimed in Claim 9, in which the array is maintained in a continuous state of alteration by the continuous pseudo-random selection of a position on the array and the addition of a pseudo-random number to the existing number at that position.
